# EUROPÄISCHE PATENTSCHRIFT

(11) **EP 0 425 762 B1**
(45) Veröffentlichungstag und Bekanntmachung des Hinweises auf die Patenterteilung: **13.09.1995**
(21) Anmeldenummer: 90112889.2
(22) Anmeldetag: 06.07.1990
(51) Int. Cl.: B29C 47/66

(54) **Extrusionszylinder**
Extrusion cylinder
Cylindre d'extrusion

(30) Priorität: 28.10.1989 DE 3935970
(43) Veröffentlichungstag der Anmeldung: 08.05.1991
(73) Patentinhaber: SAAR-HARTMETALL UND WERKZEUGE GMBH, 66333 Völklingen (DE)
(72) Erfinder: Barbian, Rudolf, D-6625 Püttlingen (DE)
(74) Vertreter: Vièl, Christof, Dipl.-Ing.

(56) Entgegenhaltungen:
- WO-A-86/02313
- DE-B- 2 423 785
- DE-U- 8 715 487

## Beschreibung

Die Erfindung betrifft ein Verfahren zum Herstellen eines Extrusionszylinders für die Extrusion von Kunststoffen bei hohen Arbeitstemperaturen.

Bei der Verarbeitung von Kunststoffen ist es bekannt, beispielsweise Kunststoff-Pulver oder -Granulat mit Hilfe einer Schnecke unter Aufheizung zu plastifizieren und zu extrudieren. Die Schnecke befindet sich in einem Zylinder, der im einfachsten Fall aus Stahl besteht. Je nach zu verarbeitendem Kunststoff oder auch beispielsweise beim Extrudieren von Oxydkeramik sowie Kunststoffen mit hohen Füllstoffanteilen kommt es zu großem Verschleiß des Zylinders.

Aus der Druckschrift DE 34 37 559 A1 ist ein Verfahren zur Herstellung eines verschleißfesten Arbeitsraumes, vorzugsweise für Spritzgießmaschinen und Extruder, sowie ein danach hergestellter verschleißfester Arbeitsraum bekannt. Gemäß dieser Druckschrift soll vor dem Einfügen von Keramikeinsätzen in ein Trägergehäuse eine Vorspannung dieser Keramikeinsätze mit Hilfe eines Zugankers erfolgen. D.h. vor dem Einbau werden die Keramikeinsätze zusammengepreßt und befinden sich dann in dem Trägergehäuse. Während des späteren Betriebs sind diese Keramikeinsätze nicht arretiert oder verspannt.

Somit kann es vorkommen, daß sich während des Betriebs die Keramikeinsätze lockern.

Aus der Druckschrift DE 24 23 785 B1 ist ein Verschleißeinsatz für das Schneckengehäuse einer Doppelschneckenstrangpresse oder -spritzgießmaschine bekannt. Diese bekannte Maschine weist keinen Stahlmantel auf, vielmehr sind mehrere Schneckengehäuse bzw. Gehäuseschüsse vorhanden, die axial verspannt sind. Die Verschleißeinsätze sollen etwas länger als das jeweilige zugehörige Schneckengehäuse sein und Fixierschrauben sind von jedem Gehäuseschuß in ein Verschleißteil geschraubt. Es handelt sich bei dieser bekannten Maschine um sehr große Maschinen, 10 bis 15 m hoch, die auf Fundamentplatten abgestützt werden müssen, die mittels Zugankern mit dem Bodenfundament der Maschine verbunden sind.

Es ist schon versucht worden, dem Extrusionszylinder eine höhere Standzeit dadurch zu verleihen, daß man in ihn Büchsen aus Hartmetall eingesetzt hat. Vor allem wegen der bei einem Extrusionszylinder vorhandenen hohen Betriebstemperaturen kam es insofern zu Störungen, als die Hartmetall-Büchsen sich in dem Stahlmantel lockern können.

Der Erfindung liegt die Aufgabe zugrunde, ein Verfahren der eingangs näher bezeichneten Art zu schaffen, wobei ein Extrusionszylinder geschaffen wird, der eine lange Haltbarkeit aufweist, ohne daß die aufgezeigten Störungen auftreten, d.h. es sollen insbesondere die Wirkungen der unterschiedlichen Ausdehnungskoeffizienten von Stahl und Hartmetall oder vergleichbarer Werkstoffe ausgeschaltet werden.

Diese Aufgabe wird durch die folgenden Verfahrensschritte gelöst:
- Einschrumpfen einer ersten Büchse aus Hartmetall in einen Stahlmantel,
- Arretieren der ersten Büchse in axialer Richtung,
- Einschrumpfen weiterer Büchsen in den Stahlmantel,
- Axiales Verspannen der weiteren Büchsen gegen die erste Büchse.

Eine weitere Ausbildung der Erfindung besteht darin, daß das Arretieren der ersten Büchse in axialer Richtung mittels einer in dem Stahlmantel radial geführten Schraube erfolgt.

Eine andere erfindungsgemäße Ausbildung besteht darin, daß das axiale Verspannen der weiteren Büchsen mit Hilfe eines in dem Stahlmantel geführten Gewinderinges erfolgt.

Die mit der Erfindung erzielten Vorteile bestehen insbesondere darin, daß ein Extrusionszylinder geschaffen worden ist, der eine lange Gebrauchszeit hat und der schnell für verschiedene Extrusionsprozesse einsetzbar ist, beispielsweise beim Extrudieren von Kunststoffen unterschiedlicher Farbe.

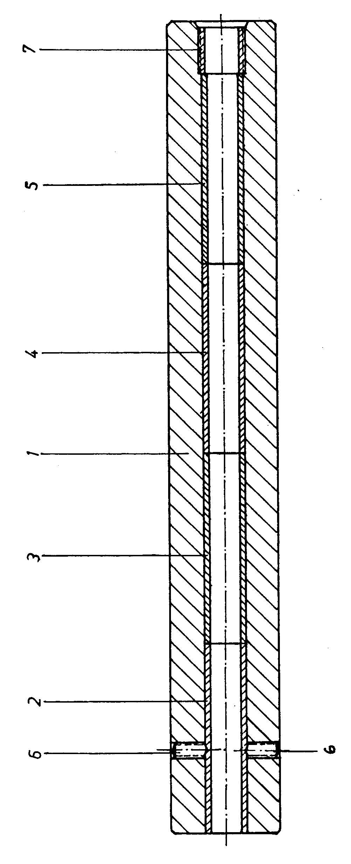

Ein Ausführungsbeispiel eines mit dem erfindungsgemäßen Verfahren geschaffenen Extrusionszylinders ist in der Zeichnung dargestellt und wird im folgenden näher beschrieben.

In der Zeichnung ist der Stahlmantel mit 1 bezeichnet. In ihm sind Büchsen 2 bis 5 angeordnet, beispielsweise Büchsen aus Hartmetall. Es kommt bei dieser Anordnung darauf an, daß beim Extrudieren oder auch danach die Büchsen 2 bis 5 fest aneinander liegen. Das bedeutet, es darf zwischen den einzelnen Büchsen kein Spalt entstehen, weil in diesen Kunststoff eindringen könnte, der beim Extrudieren eines anderen Kunststoffes, beispielsweise mit einer anderen Farbe, sich störend auswirken würde.

Erfindungsgemäß wird die erste Büchse 2 in den Stahlmantel 1 eingeschrumpft. Die Büchse 2 wird dann beispielsweise mit Hilfe einer in dem Stahlmantel 1 radial geführten Schraube 6 in axialer Richtung arretiert. Es können am Umfang des Stahlmantels 1 mehrere Schrauben 6 vorhanden sein. Nach dem Arretieren in axialer Richtung durch die Schraube 6 der Büchse 2 wird der Stahlmantel 1 erneut erwärmt und die weiteren Büchsen 3, 4 und 5 in den Stahlmantel 1 eingeschrumpft. Noch bei erhöhter Schrumpf-Temperatur wird in den Stahlmantel 1 ein Gewindering 7 eingedreht und leicht angezogen, so daß die weiteren Büchsen 3, 4 und 5 axial gegen die erste Büchse verspannt sind. Danach kann das gesamte Aggregat, bestehend aus Stahlmantel 1 und eingesetzten Büchsen 2 bis 5 auf Raumtemperatur abgekühlt werden. Auf diese Weise hat man einen Extrusionszylinder erhalten, der auch bei hohen Arbeitstemperaturen und großen Temperatur-Schwankungen keine Lockerung der eingesetzten Büchsen 2 bis 5 aufweist.

## Patentansprüche

1. Verfahren zum Herstellen eines Extrusionszylinders für die Extrusion von Kunststoffen bei hohen Arbeitstemperaturen, gekennzeichnet durch folgende Verfahrensschritte:
· Einschrumpfen einer ersten Büchse (2) aus Hartmetall in einen Stahlmantel (1),
· Arretieren der ersten Büchse (2) in axialer Richtung,
· Einschrumpfen weiterer Büchsen (3, 4, 5) in den Stahlmantel (1),
· Axiales Verspannen der weiteren Büchsen (3, 4, 5) gegen die erste Büchse.

2. Verfahren gemäß Anspruch 1, **dadurch gekennzeichnet**, daß das Arretieren der ersten Büchse (2) in axialer Richtung mittels einer in dem Stahlmantel (1) radial geführten Schraube (6) erfolgt.

3. Verfahren gemäß Anspruch 1, **dadurch gekennzeichnet**, daß das axiale Verspannen der weiteren Büchsen (3, 4, 5) mit Hilfe eines in dem Stahlmantel (1) geführten Gewinderinges (7) erfolgt.

## Claims

1. A method of producing an extrusion cylinder for the extrusion of plastics materials at high operating temperatures, **characterized by** the following method steps:
· shrinking a first bush (2) of hard metal into a steel jacket (1);
· locking the first bush (2) in the axial direction;
· shrinking further bushes (3, 4, 5) into the steel jacket (1), and
· clamping the further bushes (3, 4, 5) axially against the first bush (2).

2. A method according to Claim 1, **characterized in that** the first bush (2) is locked in the axial direction by means of a screw (6) guided radially in the steel jacket (1).

3. A method according to Claim 1, **characterized in that** the further bushes (3, 4, 5) are clamped axially with the aid of a ring nut (7) guided in the steel jacket (1).

## Revendications

1. Procédé de fabrication d'un fourreau d'extrusion pour l'extrusion de matières plastiques à de hautes températures opératoires, caractérisé par les stades de procédé suivants :
- introduction avec retrait d'une première douille (2) en métal dur dans une enveloppe (1) en acier,
- blocage de la première douille (2) en direction axiale,
- introduction avec retrait d'autres douilles (3, 4, 5) dans l'enveloppe (1) en acier,
- blocage axial des autres douilles (3, 4, 5) contre la première douille.

2. Procédé suivant la revendication 1, caractérisé en ce qu'il consiste à effectuer l'immobilisation de la première douille (2) en direction axiale au moyen d'une vis (6) passant radialement dans l'enveloppe (1) en acier.

3. Procédé suivant la revendication 1, caractérisé en ce qu'il consiste à effectuer les blocages axiaux des autres douilles (3, 4, 5) à l'aide d'une bague filetée (7) vissée dans l'enveloppe (1) en acier.
